(19) **Europäisches Patentamt / European Patent Office / Office européen des brevets**

(11) **EP 1 561 990 B1**

(12) **EUROPEAN PATENT SPECIFICATION**

(45) Date of publication and mention
of the grant of the patent:
**20.08.2008   Bulletin 2008/34**

(51) Int Cl.:
***F16L 37/098*** (2006.01)

(21) Application number: **05250553.4**

(22) Date of filing: **01.02.2005**

(54) **Quick connector for high pressure applications**

Schnellkupplung

Connecteur rapide

(84) Designated Contracting States:
**AT BE BG CH CY CZ DE DK EE ES FI FR GB GR HU IE IS IT LI LT LU MC NL PL PT RO SE SI SK TR**

(30) Priority: **05.02.2004   US 774290**
**19.01.2005   US 39541**

(43) Date of publication of application:
**10.08.2005   Bulletin 2005/32**

(73) Proprietor: **TI Group Automotive Systems LLC**
**Warren,**
**Michigan 48090 (US)**

(72) Inventors:
• **Ketcham, Mark G.**
**East China**
**Michigan 48054 (US)**

• **Gunderson, Stephen H.**
**Marine City**
**Michigan 48039 (US)**

(74) Representative: **Watts, Peter Graham et al**
**Anthony Cundy & Co.**
**39/41 South Drive**
**Sutton Coldfield**
**West Midlands B75 7TE (GB)**

(56) References cited:
**EP-A- 0 505 930          EP-A- 0 529 758**
**EP-A- 1 098 126          US-A- 5 931 509**

**Description**

<u>Background of the Invention</u>

This application relates to quick connector coupling assemblies of the type for connecting a male member formed at the end of a rigid tube in a hollow female body, and more particularly to quick connector coupling assemblies for high pressure applications.

In the automotive and other fields, one type of coupling assembly often utilized to provide a fluid connection between two components or conduits are quick connectors, which generally include a male member, or tube, received and retained in a female connector body. Use of a quick connector is advantageous in that a sealed and secured fluid line may be established with minimum amount of time and expense.

The connector body defines a conduit or passage in communication with the fluid system. It also defines a hollow internal shape to receive the tube end, in liquid tight sealing relation. The hollow shape within the body also houses a retainer within the hollow shape. The retainer is insertable through an entrance opening and is captured in a position to coact with a radial upset formed a given distance from the tube end to secure the tube in the body. The retainer must be configured to permit insertion through the entrance opening without damage and yet possesses sufficient strength to retain the integrity of the coupling under pressure.

One type of retainer includes a plurality of locking arms which extend between a radially enlarged upset formed on the male member or tube and an annular radial face defined in the connector body inward of the entrance opening. The abutment of the retainer locking arms with the upset of the male member at one end and the annular radial face of the connector body at the other end prevents the withdrawal of the male member from the connector body. This type of retainer is prevalent in the art and has proven effective in many fluid line applications. Examples include U.S. Patent Nos. 5,161,832; 5,931,509; 5,324,082; and 5,626,371.

An 0-ring is sometimes used in with a quick connector to create a seal between the male member and the connector. The 0-ring is typically installed into the female body in a position to seal against the outer surface of the tube. In such a configuration, the 0-ring is located immediately axially inwardly of the retainer or separated by an annular spacer slidably mounted on the male member.

Employment of quick connect couplings in new applications intensifies the demands placed on such couplings. For example, use in automotive brake lines, or power steering lines or those in automotive air conditioning systems, requires that such devices withstand high operating pressures. Pressures in power steering lines can exceed 103.45 bar (1,500 pounds per square inch gauge (PSIG)). In automotive brake systems, the pressure can exceed 137.93 bar (2,000 PSIG). These operating conditions place demands on the quick connector coupling not present in fuel system applications.

Brief Description of the Drawings

Fig. 1 is an exploded view of a fluid coupling in accordance to the present invention;
Fig. 2 is side view of the connector body illustrated in Fig. 1;
Fig. 3 is a front view of the connector body illustrated in Fig. 1;
Fig. 4 is a cross-sectional view of the connector body along line 4-4 as shown in Fig. 2;
Fig. 5 is a perspective view of the retainer illustrated in Fig. 1;
Fig. 6 is a side view of the retainer illustrated in Fig. 1;
Fig. 7 is a cross-sectional view of the retainer along line 7-7 as shown in Fig. 6;
Fig. 8 is a cross-sectional view of the retainer along line 8-8 as shown in Fig 6;
Fig. 9 is a cross-sectional view through the fluid coupling illustrated in Fig. 1 as assembled;
Fig. 10 is a perspective view of a retainer of an alternative embodiment of a quick connector coupling in accordance to the present invention;
Fig. 11 is a side view of the retainer illustrated in Fig. 10;
Fig. 12 is a cross-sectional view of the retainer along line 12-12 as shown in Fig. 11;
Fig. 13 is a cross-sectional view of the retainer along line 13-13 as shown in Fig. 11;

<u>Detailed Description</u>

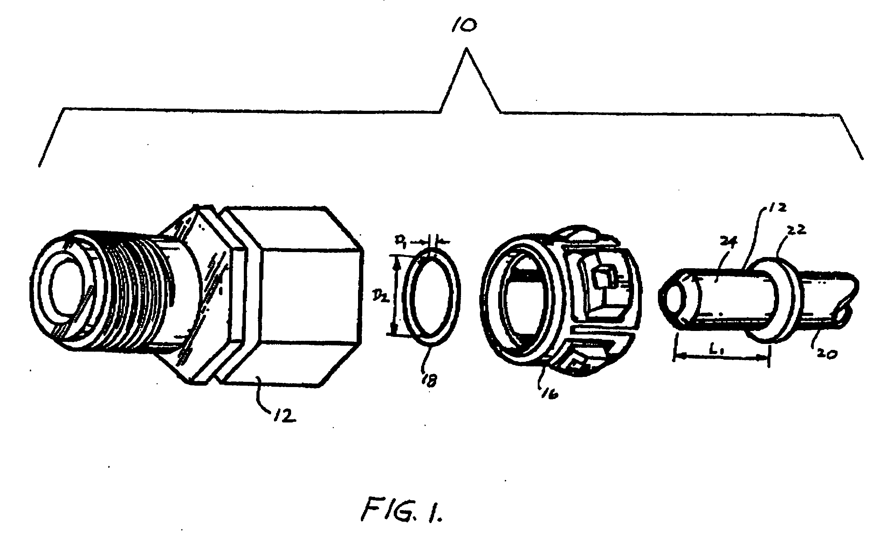

Figure 1 illustrates a fluid coupling 10 for high pressure applications in accordance to the present invention. The fluid coupling comprises a tubular male member 12, a hollow female connector body 14, a retainer 16 for securing the male member 12 within the connector body 14 and an O-ring or sealing member 18.

The male member 12 is formed at the end of a hollow and rigid tube 20 which forms a part of a fluid line system. The tube 20 may lead to a component in a fluid line system, or may itself be a portion of a component in a fluid line system. The male member 12 includes a radially enlarged annular upset 22 formed at a given distance $L_1$ from the distal end. The male member 12 also includes a cylindrical portion 24 between the upset 22 and the distal end. The cylindrical portion 24 has a diameter approximately equal to the diameter of the tube 20. A portion of the male member 12, including the upset 22, may be coated with Nylon to provide corrosion protection. Alternatively, the coating may terminate outward from upset 22 to expose the metal surface of the upset 22 and the cylindrical portion 24.

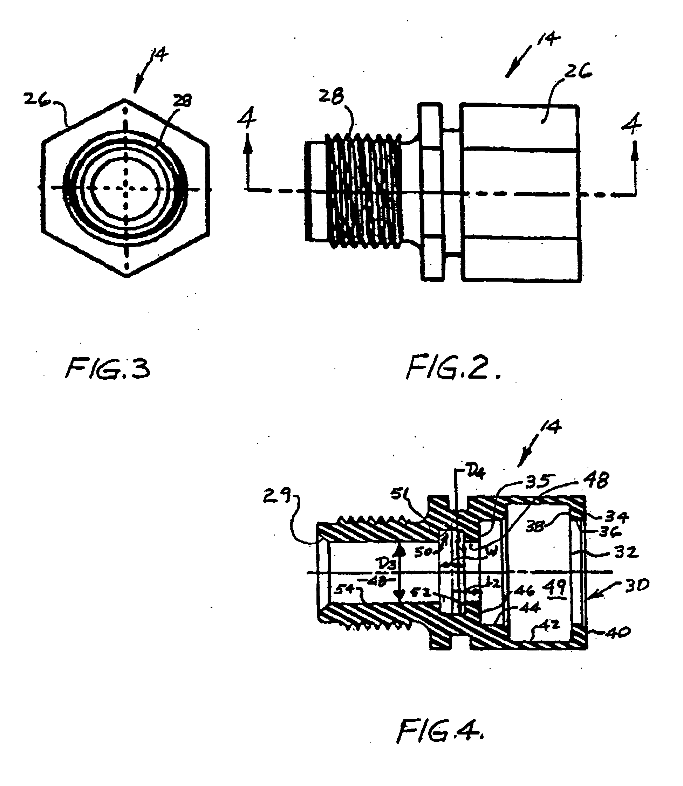

The female connector body 14 is illustrated in Figures 2-4. The female connector body 14 has a hexagonal outer surface 26 at one end and a threaded outer surface 28 at the other end. The threaded outer surface 28 is adapted to mate with the corresponding threading and seat formed in a brake component or other high pressure fluid component. Such ports are described in SAE Standard J1290, Rev. Oct. 2002, published by the Society of Automotive Engineers, Inc., which is incorporated by reference herein.

The end provided with threaded outer surface 28 terminates in an internal chamfer 29, shaped to seal on a conical surface formed within a port, for example, in a component of an automotive brake system such as a brake caliper or a brake system master cylinder. In this way, the quick connector coupling 10 of the present invention can be applied to a brake system application in direct substitution for a typical flare fitting without modification of the ports in the brake system components that connect to the tubes of the system.

As illustrated in Figure 4, the female connector body 14 is hollow and defines an axial bore 30 extending axially inwardly from an entrance 32. The bore 30 is divided into three portions: a retainer receiving portion 49, a sealing receiving portion 50 and a reduced diameter portion. The entrance 32 is defined by a radially inwardly extending rim 34 having an apex or entrance defining surface 36 and an axially inward annular load receiving face 38. The rim 34 is chamfered at the axially outward surface 40 to facilitate the insertion of the retainer 16 into the connector body 14. Axially inward from the rim 34 is a cylindrical surface 42. Axially inward from the cylindrical surface 42 is a cylindrical step 44 terminating at an annular surface 46. The annular face 38, the cylindrical surface 42, the cylindrical step 44, and the annular surface 46 define the retainer receiving portion 49 of the axial bore 30. Axially inward from the annular surface is a reduced diameter cylindrical bore 48 of the reduced diameter portion of the axial bore 30 defined by cylindrical surface 54.

A radially outwardly groove or undercut 50 is formed on the surface 54 of the reduced diameter cylindrical bore 48 at a given distance $L_2$ between the annular surface 46 and the centerline of the groove 50. The groove is defined by two annular shoulders 52 equally spaced from the centerline of the groove, extending radially outwardly from the surface of the reduced diameter cylindrical bore 48 and a radially outwardly cylindrical surface 51 having a diameter $D_4$. The shoulders 52 and the radially outwardly cylindrical surface 51 define the seal receiving portion of the axial bore 30. A radially inward extending annular rib 35 separates the seal receiving portion 50 from the retainer receiving portion of the axial bore 30. The width W of the groove 50 should be sized slightly larger than the un-deformed cross-section diameter $D_1$ of the O-ring 18 (see Figure 1) allowing the O-ring 18 to be retained axially in both directions between the shoulders 52 of the groove 50. The axially outwardly shoulder 52 absorbs the fluid pressure experienced by the O-ring.

The depth $(D_3-D_4)/2$ of the groove 50 should be slightly smaller than the un-deformed cross-section diameter $D_1$ of the O-ring 18 allowing a portion of the O-ring 18 to extend radially inwardly beyond the un-grooved surface 54 of the reduced diameter cylindrical bore 48. In addition, the un-deformed inner diameter $D_2$ of the O-ring 18 (see Figure 1) is smaller than the diameter $D_3$ of the un-grooved surface 54 of the reduced diameter cylindrical bore 48. This assures that the O-ring 18 is able to create an effective seal between the connector body 14 and the male member 12. Furthermore, the distance $L_2$ between the center of the groove 50 and the annular surface 46 should be less than the distance $L_t$ between the distal end of the male member 12 and the center of the upset 22 (see Figure 1) to assure that the O-ring 18 surrounds the cylindrical portion 24 of the male member 12 once the male member 12 is fully inserted into the connector body 14.

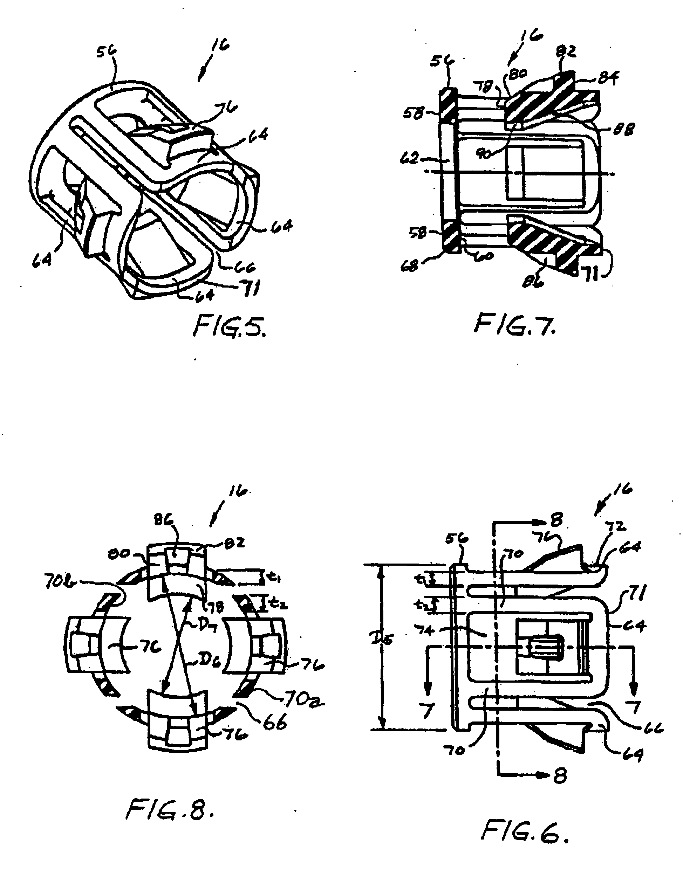

The retainer 16 is illustrated in Figures 5-8. The retainer 16 includes a cylindrical ring 56 at a first axial end. The ring 56 has a forward facing surface 58 and a rearward facing surface 60. A bore 62 is defined in the ring 56. Four locking members or wings 64 extend axially rearward or outward from the ring 56.

The locking members 64 are detached from each other at a second axial end. Four axially extending elongated slots 66 are defined between each of the adjacent locking members 64 and extend from the second axial end to the ring 56. The slots 66 allow the locking members 64 to flex radially relative to the ring 56. The ring 56 has a conical outer surface 68 to facilitate the insertion of the retainer 16 into the connector body 14.

Each locking member 64 includes two columns 70 with a radially outer surface 70a and a radially inner surface 70b. The outer surface 70a is coextensive with the outer surface of ring 56 rear connecting beam 72 connects the two columns 70 at the second axial end. The beams 72 define an axially outer or rearward edge 71 of the retainer columns 70 of adjacent locking members 64 define slots 66. The two columns 70, the ring 56, and the connecting beam 72 define, a window 74.

Each locking member 64 further includes within the window 74, a duckbill shaped flexible locking arm 76 extending axially forward from the connecting beam 72 between the two columns 70. Since the arm 76 is only connected to the remainder of the locking member 64 at the connecting beam 72, the arm 76 is able to flex radially relative to the remainder of the locking member 64. Each arm 76 has a first, or front or forward abutment surface 78, a first ramped top surface 80, a second ramped top surface 82, a second, or rear or rearward abutment surface 84, a notch 86 defined on the ramped top surfaces 80,82, a ramped bottom surface 88, and a cylindrical flat bottom surface 90 that extends axially outwardly from said first abutment surface.

The cylindrical flat bottom surfaces 90 of duck bill locking arms 76 collectively define an intermittent cylindrical surface having an inner diameter $D_7$. This diameter approximates the outer diameter of the tube 20. The surfaces 90 extend axially a distance sufficient for the contact area of the surfaces 90 to extend about 20% to 25% of the axial distance between front abutment surface 78 and rear abutment surface 84. Expressed as a ratio, deemed the "tube contact ratio," the axial length of surface 90 should be 0.20 to 0.25 times the axial distance between the surfaces 78 and 84.

The notch 86 allows the cross-sectional thickness of the arm 76 to be approximately equal, thus reducing the possibility of sinks or voids in the arm 76 during the molding process of the retainer 16.

It is desirable for the radial projection distance $t_1$, $t_2$ of each column 70 is sized to allow for the structural integrity necessary for the locking member to flex without fracturing, while also allowing the arms to have sufficient abutment surface areas to retain the male member in the connector body during high pressure applications. To accomplish these two goals, it is preferable that the ratio of the radial projection distance $t_1$, $t_2$ of each column 70 relative to the outer diameter $D_5$ of the ring 56 ($t_1/D_5$, $t_2/D_5$) is between 0.03 and 0.12. It is more preferable that the ratio of the radial projection distance $t_1$, $t_2$ of each column 70 relative to the outer diameter $D_5$ of the ring 56 ($t_1/D_5$, $t_2/D_5$) is between 0.04 and 0.06.

The columns 70 are sized to permit flexing on insertion of the retainer 16 through the entrance opening 32 into the hollow shape of retainer receiving portion 49 of the body 14. Because the retainer 16 is molded plastic, it is important that these columns possess sufficient strength to remain intact on assembly yet posses sufficient flexing capability to endure the assembly process. This goal is contemplated by molding techniques which to some extent dictate the shape of the cross-sectional area of the columns.

Equality of the cross-sectional area of each of the eight columns is important because the columns thereby react similarly to each other when flexing occurs during insertion of the retainer 16 through the entrance opening 32 of the body 14.

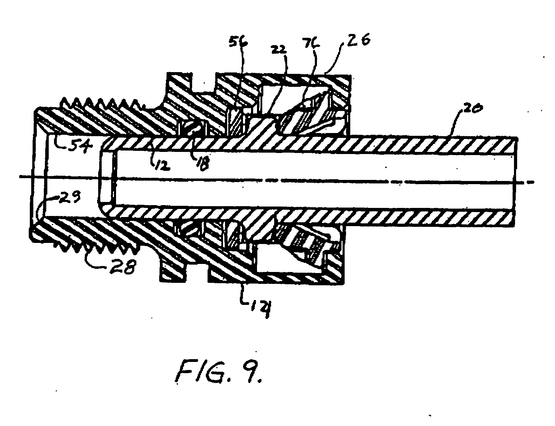

The cross-sectional area of an effective column 70 can be defined relative to the cross-sectional area of an imaginary annular planar surface lying in a plane perpendicular to the imaginary centerline of bore 30, shown in FIG. 9, having an outer circumference coextensive with the radially outer surface 70a of the columns and an inner circumference coextensive with the radially inner surfaces 70b of the columns. This cross-sectional area of a column 70 should range from between 3% to 6% of the annular area defined by the outer surfaces 70a of the columns and the inner surfaces 70b of the columns (See FIG. 8). Expressed as a ratio, deemed the "column area ratio," the cross-sectional area of one column 70 should be 0.03 to 0.06 of the total area of an imaginary annular surface defined by the inner and outer surfaces 70a and 70b of the columns.

To form the connection as illustrated in Figure 9, the O-ring 18 is first positioned within the groove 50 of the connector body 14. The retainer 16 is then inserted into the connector body 14. As the retainer 16 is inserted into the body 14, the first ramped top surface 78 of each arm 76 contacts the apex 36 of the rim 34. Further insertion of the retainer 16 axially inward flexes the arms 76 radially inward relative to the locking members 64 and also flexes the locking members 64 radially inward relative to the ring 56. After the retainer 16 has been fully inserted into the connector body 14, the arms 76 and the locking members 64 spring radially outward until the rear connecting beams 72 of the locking members 64 abut the rim 34. In its fully inserted position, the retainer 16 is constrained radially and axially within the connector body 14. Abutment of the connecting beams 64 with the rim 34 and abutment of the ring 56 with the cylindrical step 44 constrain the retainer 16 radially within the connector body 14. Abutment of the forward facing surface 58 of the ring 56 with the annular surface 46 of the connector body 14 prevents the retainer 16 from further axially inward movement. Abutment of the rear abutment surfaces 84 of the locking members 64 with the annular face 38 prevents the retainer 16 from further axially outward movement

With the retainer 16 fully inserted into the connector body 14, the male member 12 can be inserted into the assemblage of body/retainer 14 and 16. As the male member 12 is inserted axially inward into the body/retainer 14,16 assembly, the upset 22 of the male member 12 contacts the ramped bottom surfaces 88 of the arms 76. Since the diameter of the upset 22 is greater than the diameter of portions of the ramped bottom surfaces 88, further axially inward insertion of the male member 12 causes the arms 76 to spread radially outward. Once male member 12 has been sufficiently inserted axially inward for the upset 22 to surpass the arms 76, the arms 76 spring radially inward such that cylindrical flat bottom surfaces 90 contact the outer surface of tube 20. With the coupling 10 in the locked position, the upset 22 is located between and in abutting relation with the rearward facing surface 60 of the ring 56 and the front abutment surfaces 78 of the arms 76. The male member 12 is constrained radially and axially within the retainer 16. Abutment of the cylindrical portion 24 of the male member 12 with the surface of the bore 62 of the ring 56 and with the bottom cylindrical flat surfaces 90 of the arms 76 constrains the male member 12 radially within the retainer 16. Abutment of the rearward facing surface 60 of the ring 56 with the forward surface of the upset 22 prevents the male member 12 from further axially inwardly movement. Abutment of the rearward surface of the upset 22 with the front abutment surfaces 78 of the arms 76 prevents the male member 12 from further axially inwardly movement. Since the retainer 16 is constrained radially and axially within the connector body 14, the male member 12 is also constrained radially and axially within the connector body 14.

For the purpose of describing the present invention of this application, the term "contact ratio" is used to represent the surface area of the forward abutment surfaces available for abutment with the upset compared to the surface area of an imaginary continuous surface linking and including the forward abutment surfaces. For the type of retainer illustrated in Figures 5-8, the continuous surface would be an annular surface. A continuous surface, having a contact ratio of 1, is not practical for the type of retainer illustrated in Figures 5-8 since the elements of the retainer allowing the locking mechanism to flex radially requires space. Therefore, the present invention balances the space required for the elements allowing the locking mechanism to flex radially with the contact surface required for high pressure application. For the type of retainer illustrated in Figures 5-8, the contact ratio is the total surface area of the forward or front abutment surfaces 78 of the arms 76 relative to the area defined by the outer diameter $D_6$ of the forward abutment surfaces and the inner diameter $D_7$ of the forward or front abutment surfaces:

$$\text{CONTACT RATIO} = \frac{\text{total surface area of forward abutment surfaces}}{\pi*(D_6/2)^2 - \pi*(D_7/2)^2}$$

It is preferable that the contact area available is over 50% and less than 70% of the total surface area of an imaginary continuous surface defined by the radially inner and radially outer extent of the front abutment surfaces 78. It is more preferable that the front abutment surface contact available is over 55% and less than 60% of the total area of the imaginary annular surface. It is understood that the total surface area of the forward abutment surfaces is not necessarily the total surface area abutting the upset, but merely the total surface area which will abut the upset if there is a perfect fit between abutment surfaces and the surface of the upset. The actual total surface area abutting the upset may be smaller due to at least; 1) the mismatch of the contour and/or size of forward abutment surfaces relative to the contour and/or size of the rearward surface of upset, and 2) the roughness of the surfaces of the forward abutment surfaces of the arms and/or the roughness of the rearward surface of the upset.

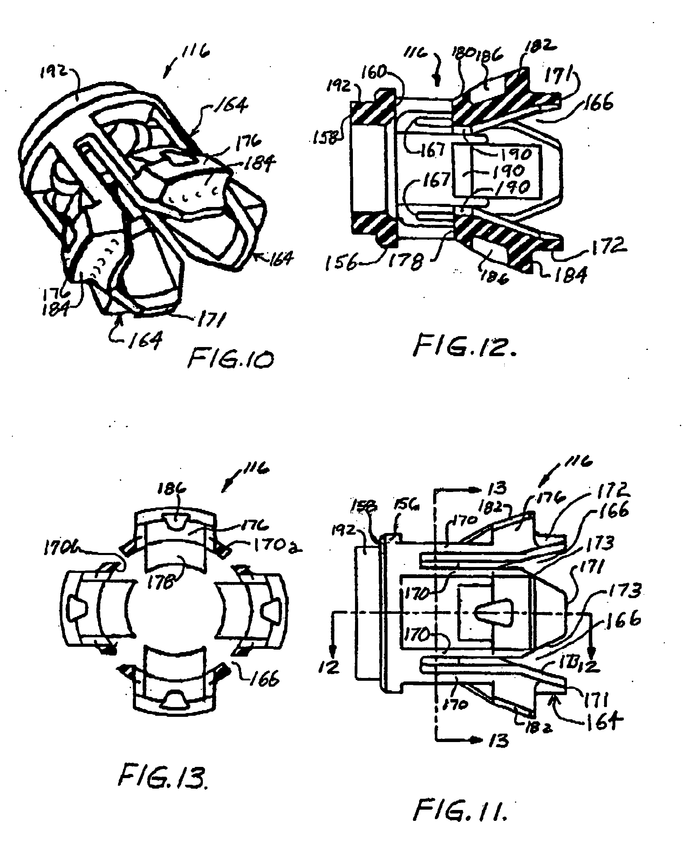

A second embodiment of a retainer 116 for a quick connector coupling in accordance with the present invention is illustrated in Figures 10-13. The retainer is similar to the retainer of the embodiment of FIGS. 1-9. Differences are described in detail below with reference to FIGS. 10-13.

The retainer 116 of the second embodiment is similar to the retainer 16 of the first embodiment with the exception that the notch 186 defined on the top surfaces 180,182 of the arm 176 has a U-shaped cross-section. The retainer 116 of second embodiment further includes a cylindrical extension 192 extending from the forward facing surface 158 of the ring 156. The cylindrical extension 192 provides additional inner surface area to constrain the male member 12 radially within the retainer 116.

Locking members 164 are separated by slots 166. The locking members include two columns 170 and a connecting beam 172. The columns extend axially outward or rearward from annular ring 156. The outer surface 170a of each column 170 is coextensive with the outer surface of ring 156.

The retainer 116 of the second embodiment also has a portion of the arm 176 connected directly to the columns 170. It also defines the second ramped top surface 182. The connection of a portion of the arm 176 directly to columns 170 provides additional structural integrity when the arm 176 flexes radially relative to the remainder of the locking member 164.

As best seen in FIG. 11, each column 170 includes an angled surface 173 that converges toward a similar surface 173 on the other column of the locking member to produce a truncated shaped beam 172 that narrows in an outward direction to the outer edge 171 of the retainer. The angled surfaces 173 create a diverging area of slots 166 commencing axially inward of rear abutment surface 184 and extending to the outward edge 171 of beams 172.

On installation of the retainer 116 into a hollow female connector body, the diverging areas of slots 166 permit the locking members 164 supported on columns 170 to flex radially inwardly such that the ends of the locking members 164 can move close together and close the space defined by the divergent slots without interfering with each other to aid the installation process.

Slots 166 include an axially inner terminus 167 spaced axially outward from ring 156. The distance between rearward facing surface 160 and the axially inner terminus 167 of slots 166 is about 15% to 25% of the distance between rearward facing surface 160 and the front abutment surface 178. This form of slot 166 as compared to the slots 66 of the embodiment of FIGS. 1 to 9, provides for additional strength in the columns 170 in relation to radial flexing of the locking members 164 relative to the ring 156.

The quick connectors of the present invention are suitable for high pressure applications. This includes automotive power steering lines where the operating pressure may be in the realm of 103.45 bar (1,500 PSIG) and automotive brake lines where the operating pressure may exceed 137.93 bar (2,000 PSIG). To confirm the integrity of the connection couplings or connectors must successfully meet stringent requirements established by automotive manufacturers. For example, connectors such as those of the illustrated embodiments have successfully passed "hot burst tests" as defined in General Motors Technical Specification 20.0 1.07A, for Hydraulic Brake Line Assembly (Re1002) at 4.2.1.2.8. In this test a coupling and tube assembly 10 are placed in an environmental chamber and caused to soak at 125°C (257°F (Fahrenheit)) for twenty-four hours. The pressure in the tube and coupling assembly is increased at a rate of 34.48 bar (500 PSIG) per minute. It is necessary that the coupling maintain its fluid tight connection until the pressure exceeds 344.83 bar (5,000 PSIG).

It should be noted that in the embodiment of FIGS. 10-13, the "contact ratio", the "tube contact ratio", and the "column area ratio" remain as described with respect to the embodiment as defined with respect to the embodiment of FIGS. 1-9. In the embodiment of FIGS. 10-13, the "contact ratio" is the ratio of the total area of the first or front abutment surface 178 of each arm 176 divided by the area of an imaginary annular surface having an inner diameter coextensive with the radial inner edge of the front abutment surface 178 and an outer diameter coextensive with the radial outer edge of the front abutment surface.

The "tube contact ratio" is the ratio of the axial length of the cylindrical flat bottom surface 190 available to contact the outer surface of a tube positioned within the retainer 1 16 divided by the axial distance between the first or front abutment surface 170 and the second or rear abutment surface 184.

The "column area ratio" is the cross-sectional area of one of the columns 170 divided by the area of an imaginary annular surface having an outer circumference coextensive with the radially outer surfaces 170a of the columns 170 and an inner circumference coextensive with the radially inner surfaces 170b of the columns 170.

It is preferable that the plastic retainer 16 or 116 are formed of polyetheretherketone, also known as PEEK. A suitable PEEK composition for forming the retainer and/or spacer of the present invention is available under the trademark Victrex PEEK™ 450G.

Various features of the present invention have been described with reference to the above illustrative embodiments. It should be understood that modifications may be made without departing from the spirit and scope of the invention as represented by the following claims. In particular, depending on the operating pressures of a fluid system the disclosed, features of the retainers 16 and 116 have applicability to quick connector couplings in which the seal between the tube and connector body is not disposed in an O-ring groove in the body. Numerous other seal retention arrangements are well known in the quick connector art.

**Claims**

1. A fluid coupling (10) comprising:

a female connector body (14) defining a hollow tube receiving bore (30) extending axially inwardly into said connector body from an entrance opening (32) and defining a fluid flow path, said entrance defined by a radially inwardly extending rim (34);
a plastic retainer (16, 116) received within said bore of said female connector body, wherein said retainer includes a cylindrical ring (56, 156) at a first, axially inboard end and at a plurality of approximately equally spaced locking members (64, 164) extending axially outward from said ring, said locking members each defining a window (74), and including an arm in each said window, each said arm (76, 176) including a front abutment surface (78, 178) and a rear abutment surface (84, 184), said locking members (64, 164) being separated by axially extending slots (66, 166) between each said member, each said locking member (64, 164) including two columns (70, 170) and a beam (72, 172) connecting said two columns of each locking member at a second, axially outer end, and said arm of each said member extending axially from each said beam (72, 172), between said columns (70, 170) in said window (74, 174) **characterised in** the there are at least four locking members, the contact ratio of the front abutment surfaces (78,178) of all the locking members (64,164) equalling;

$$\frac{\text{total surface area of the front abutment surfaces (78, 178)}}{\pi *(D_6/2)^2 - \pi *(D_7/2)^2}$$

wherein $D_6$ is the outer diameter of the front abutment surfaces (78, 178) and $D_7$ is the inner diameter of the front abutment surfaces (78, 178); being between 0.50 and 0.80.

2. The fluid coupling of claim 1 **characterised in that** said retainer (16, 116) is formed of polyetheretberketone.

3. The fluid coupling of claim 1 **characterised in that**, the contact ratio of the front abutment surfaces (78,178) is between 0.55 and 0.60.

4. The fluid coupling of claim 1 **characterised in that**, the ratio of the radial projection distance of each of said column (70, 170) relative to the outer diameter of said ring (56, 156) is between 0.03 and 0.12.

5. The fluid coupling of claim 4 **characterised in that**, the ratio of the radial projection distance of each of said column (70, 170) relative to the outer diameter of said ring (56, 156) is between 0.04 and 0.06.

6. The fluid coupling of claim 1 **characterised in that** said connector body (14) further defines a groove (50) accommodating a sealing member (18), said groove (50) having two shoulders (52) extending radially outwardly from said bore (30).

7. The fluid coupling of claim 6 **characterised in that** said sealing member (18) is an O-ring disposed in said groove (50).

8. The fluid coupling of claim 6 **characterised in that** the depth of said groove (50) is less than the un-deformed cross section diameter of said O-ring (18).

9. The fluid coupling of claim 6 **characterised in that** the O-ring (18) is deformed by the radially outwardly surface of said groove (50) and the outer surface of a tube (20).

10. The fluid coupling of claim 1 **characterised in that** a portion of said arm (76, 176) of each said locking member (64, 164) is connected directly to said columns (70,170) of said locking member (64,164).

11. The fluid coupling of claim 1 **characterised in that** each of said arm (76, 176) of each said locking member (64, 164) includes top surface and a notch (88, 186) formed therein.

12. The fluid coupling of claim 11 **characterised in that** a cross-section of said notch (88,186) is L-shaped.

13. The fluid coupling of claim 11 **characterised in that** a cross-section of said notch (88,186) is U-shaped.

14. The fluid coupling of claim 11 **characterised in that** said female connector body (14) has a threaded outer surface (28) at one end and said end is configured to seal within a port formed in an automotive brake system component.

15. The fluid coupling of claim 14 **characterised in that** said female connector body (14) has a hexagonal outer surface (26) at the other end and a chamfer (29) is provided in said internal bore (48) at said threaded end.

16. The fluid coupling of claim 1 **characterised in that** a male member (12) further includes a layer of Nylon coating an upset (22).

17. A fluid coupling as claimed in claim 1 **characterised in that** said columns (20, 120) have radially inner (70b, 170b) and outer (70a, 170a) surfaces and the ratio of the cross-sectional area of one column to the area of an imaginary annular planar surface perpendicular to the centerline of said axial bore and having an outer circumference coextensive with the outer surfaces (70a, 170a) of said columns (70, 170) and an inner circumference coextensive with the radially inner surfaces (70b, 170b) of said columns is between 0.03 to 0.06.

18. A fluid coupling as claimed in claim 1 **characterised in that** said columns have radially inner and outer surfaces and the ratio of the cross-sectional area of one column (70, 170) to the area of an imaginary annular planar surface perpendicular to the centerline of said axial bore and having an outer circumference coextensive with the outer surfaces (70a, 170a) of said columns (70, 170) and an inner circumference coextensive with the radially inner surfaces (70b, 170b) of said columns is between 0.03 to 0.06.

19. A fluid coupling as claimed in claim 1 **characterised in that** each said arm (76, 176) includes a flat cylindrical bottom surface (90, 190) extending axially from said first abutment surface (78, 178) toward said second abutment surface (84, 184), and the ratio of the axial length of said flat cylindrical bottom surface to the distance between said first and second abutment surface is between 0.20 and 0.25.

20. A fluid coupling as claimed in claim 18 **characterised in that** each said arm (76, 176) includes a flat cylindrical bottom surface (90, 190) extending axially from said front abutment surface (78, 178) toward said rear abutment surface (84, 184), and the ratio of the axial length of said flat cylindrical bottom surface (90, 190) to the distance between said front and rear abutment surface is between 0.20 and 0.25.

21. A fluid coupling as claimed in any one of claims 1, 17, 18, 19 and 20 **characterised in that** said coupling can maintain its fluid tight integrity to at least a fluid pressure of 344.83 bar (5,000 PSIG) after being subjected to a temperature of 125°C (257°F) for at least twenty-four hours while subjected to an increase of pressure of 34.48 bar (500 PSI) per minute.

22. A fluid coupling as claimed in claim 1 **characterised in that** each of said arms (76, 176) include angled edge surfaces that commence intermediate said front (78, 178) and rear (84, 184) abutment surfaces and extend axially toward each other to the axial outward edge of said beam to define divergent slots between said locking members.

23. A fluid coupling as claimed in claim 1 **characterised in that** said columns (70, 170) of adjacent locking members (64, 164) define said slots (66, 166) and the axial length of said slots between adjacent locking members terminates intermediate said cylindrical ring (56, 156) and said front abutment surfaces (78, 178).

24. A fluid coupling as claimed in any one of claims 1, 2, 3, 17, 19, 26 and 27 **characterised in that** a tubular male member (12) having a radially enlarged annular upset (22), is received within said retainer (16, 116), and said upset is positioned between said ring (56, 156) of said retainer and said front abutment surfaces (78, 178).

**Patentansprüche**

1. Fluidkupplung (10) mit einem aufnehmenden verbinderkörper (14), der eine ein hohles Rohr aufnehmende Bohrung (30) begrenzt, die sich von einer Eingangsöffnung (32) aus axial nach innen in den Verbinderkörper erstreckt und einen Fluidströmungsweg bildet, wobei der Eingang von einem sich radial nach innen erstreckenden Rand (34) begrenzt wird;
einem Kunststoffhalter (16, 116), der in der Bohrung des aufnehmenden Verbinderkörpers aufgenommen ist, wobei der Halter einen zylindrischen Ring (56, 156) an einem ersten, axial innen liegenden Ende und eine Vielzahl von annähernd gleichmäßig voneinander beabstandeten Sperrteilen (64, 164) enthält, die sich von dem Ring aus axial nach außen erstrecken, wobei die Sperrteile jeweils ein Fenster (74) begrenzen und einen Arm in jedem Fenster enthalten, wobei jeder Arm (76, 176) eine vordere Widerlagerfläche (78, 178) und eine hintere Widerlagerfläche (84, 184) enthält, wobei die Sperrteile (64, 164) durch axial verlaufende Schlitze (66, 166) zwischen jedem Teil voneinander getrennt sind, wobei jedes Sperrteil (64, 164) zwei Säulen (70, 170) und einen Träger (72, 172) enthält, der die beiden Säulen eines jeden Sperrteiles an einem zweiten axial äußeren Ende miteinander verbindet, und wobei sich der Arm eines jeden Teiles axial von jedem Träger (72, 172) aus zwischen den Säulen (70, 170) in dem Fenster (74, 174) erstreckt, **dadurch gekennzeichnet, dass** mindestens vier Sperrteile vorhanden sind, wobei das Kontaktverhältnis der vorderen Widerlagerflächen (78, 178) von allen Sperrteilen (64, 164):

$$\frac{\text{Gesamtfläche der vorderen Widerlagerflächen (78, 178)}}{\pi*(D_6/2)^2 - \pi*(D_7/2)^2}$$

worin $D_6$ der Außendurchmesser der vorderen Widerlagerflächen (78, 178) ist und $D_7$ der Innendurchmesser der vorderen widerlagerflächen (78, 178) ist; zwischen 0,50 und 0,80 ist.

2. Fluidkupplung nach Anspruch 1, **dadurch gekennzeichnet, dass** der Halter (16, 116) aus Polyetheretherketon gebildet ist.

3. Fluidkupplung nach Anspruch 1, **dadurch gekennzeichnet, dass** das Kontaktverhältnis der vorderen Widerlagerflächen (78, 178) zwischen 0,55 und 0,60 ist.

4. Fluidkupplung nach Anspruch 1, **dadurch gekennzeichnet, dass** das Verhältnis der radialen Projektionslänge einer jeden Säule (70, 170) zu dem Außendurchmesser des Ringes (56, 156) zwischen 0,03 und 0,12 ist.

5. Fluidkupplung nach Anspruch 4, **dadurch gekennzeichnet, dass** das Verhältnis der radialen Projektionslänge einer jeden Säule (70, 170) zu dem Außendurchmesser des Ringes (56, 156) zwischen 0,04 und 0,06 ist.

6. Fluidkupplung nach Anspruch 1, **dadurch gekennzeichnet, dass** der verbinderkörper (14) außerdem eine Nut (50) hat, in der ein Dichtungsteil (18) untergebracht ist, wobei die Nut (50) zwei Schultern (52) hat, die sich von der Bohrung (30) aus radial nach außen erstrecken.

7. Fluidkupplung nach Anspruch 6, **dadurch gekennzeichnet, dass** das Dichtungsteil (18) ein in der Nut (50) angeordneter O-Ring ist.

8. Fluidkupplung nach Anspruch 6, **dadurch gekennzeichnet, dass** die Tiefe der Nut (50) kleiner ist als der unverformte Querschnittsdurchmesser des O-Ringes (18).

9. Fluidkupplung nach Anspruch 6, **dadurch gekennzeichnet, dass** der O-Ring (18) durch die radial äußere Oberfläche der Nut (50) und die Außenfläche eines Rohres (20) verformt wird.

10. Fluidkupplung nach Anspruch 1, **dadurch gekennzeichnet, dass** ein Teil des Armes (76, 176) eines jeden Sperrteiles (64, 164) direkt mit den Säulen (70, 170) des Sperrteiles (64, 164) verbunden ist.

11. Fluidkupplung nach Anspruch 1, **dadurch gekennzeichnet, dass** jeder Arm (76, 176) eines jeden Sperrteiles (64, 164) eine obere Oberfläche und eine darin geformte Kerbe (88, 186) aufweist.

12. Fluidkupplung nach Anspruch 11, **dadurch gekennzeichnet, dass** ein Querschnitt der Kerbe (88, 186) L-förmig ist.

13. Fluidkupplung nach Anspruch 11, **dadurch gekennzeichnet, dass** ein Querschnitt der Kerbe (88, 186) U-förmig ist.

14. Fluidkupplung nach Anspruch 11, **dadurch gekennzeichnet, dass** der aufnehmende verbinderkörper (14) eine mit einem Gewinde versehene Außenfläche (28) an einem Ende hat, und dieses Ende so gestaltet ist, um in einer Öffnung, die in einem Kfz-Bremssystembauteil gebildet ist, zu dichten.

15. Fluidkupplung nach Anspruch 14, **dadurch gekennzeichnet, dass** der aufnehmende Verbinderkörper (14) eine sechseckige Außenfläche (26) an dem anderen Ende hat und eine Fase (29) in der Innenbohrung (48) an dem mit einem Gewinde versehenen Ende vorgesehen ist.

16. Fluidkupplung nach Anspruch 1, **dadurch gekennzeichnet, dass** ein aufzunehmendes Teil (12) ferner eine Nylonschicht enthält, mit der eine Stauchung (22) beschichtet ist.

17. Fluidkupplung nach Anspruch 1, **dadurch gekennzeichnet, dass** die Säulen (20, 120) radial innere (70b, 170b) und äußere (70a, 170a) Oberflächen haben und das Verhältnis des Querschnittsbereichs einer Säule zu dem Bereich einer gedachten ringförmigen ebenen Fläche, die senkrecht zu der Mittellinie der Axialbohrung ist und einen Außenumfang hat, der sich gleich weit wie die äußeren Oberflächen (70a, 170a) der Säulen (70, 170) erstreckt, und einen Innenumfang hat, der sich gleich weit wie die radial inneren Oberflächen (70b, 170b) der Säulen erstreckt, zwischen 0,03 und 0,06 ist.

18. Fluidkupplung nach Anspruch 1, **dadurch gekennzeichnet, dass** die Säulen radial innere und äußere Oberflächen haben und das Verhältnis des Querschnittsbereichs einer Säule (70, 170) zu dem Bereich einer gedachten ringförmigen ebenen Fläche, die senkrecht zu der Mittellinie der Axialbohrung ist und einen äußeren Umfang, der sich gleich weit wie die äußeren Oberflächen (70a, 170a) der Säulen (70, 170) erstreckt und einen Innenumfang hat, der sich gleich weit wie die radial inneren Oberflächen (70b, 170b) der Säulen erstreckt, zwischen 0,03 und 0,06 ist.

19. Fluidkupplung nach Anspruch 1, **dadurch gekennzeichnet, dass** jeder Arm (76, 176) eine flache zylindrische Bodenfläche (90, 190) aufweist, die sich von der ersten Widerlagerfläche (78, 178) aus axial in Richtung auf die zweite Widerlagerfläche (84, 184) erstreckt, und das Verhältnis der axialen Länge der flachen zylindrischen Bodenfläche zu dem Abstand zwischen der ersten und der zweiten Widerlagerfläche zwischen 0,20 und 0,25 ist.

**20.** Fluidkupplung nach Anspruch 18, **dadurch gekennzeichnet, dass** jeder Arm (76, 176) eine flache zylindrische Bodenfläche (90, 190) aufweist, die sich von der vorderen Widerlagerfläche (78, 178) aus axial in Richtung auf die hintere Widerlagerfläche (84, 184) erstreckt, und das Verhältnis der axialen Länge der flachen zylindrischen Bodenfläche (90, 190) zu dem Abstand zwischen der vorderen und hinteren Widerlagerfläche zwischen 0,20 und 0,25 ist.

**21.** Fluidkupplung nach irgendeinem der Ansprüche 1, 17, 18, 19 und 20, **dadurch gekennzeichnet, dass** die Kupplung ihre fluiddichte Unversehrtheit mindestens bis zu einem Fluiddruck von 344, 83 bar (5.000 PSIG) aufrechterhalten kann, nachdem sie einer Temperatur von 125 °C (257 °F) für mindestens vierundzwanzig Stunden ausgesetzt wurde, während sie einer Zunahme des Druckes von 34,48 bar (500 PSI) pro Minute ausgesetzt wurde.

**22.** Fluidkupplung nach Anspruch 1, **dadurch gekennzeichnet, dass** jeder der Arme (76, 176) abgewinkelte Kantenflächen aufweist, die zwischen der vorderen (78, 178) und hinteren (84, 184) Widerlagerfläche beginnen und sich axial aufeinander zu bis zu der axial äußeren Kante des Trägers erstrecken, um sich weitende Schlitze zwischen den Sperrteilen zu begrenzen.

**23.** Fluidkupplung nach Anspruch 1, **dadurch gekennzeichnet, dass** die Säulen (70, 170) von benachbarten Sperrteilen (64, 164) Schlitze (66, 166) begrenzen und die axiale Länge der Schlitze zwischen benachbarten Sperrteilen zwischen dem zylindrischen Ring (56, 156) und den vorderen Widerlagerflächen (78, 178) endet.

**24.** Fluidkupplung nach irgendeinem der Ansprüche 1, 2, 3, 17, 19, 21 und 22, **dadurch gekennzeichnet, dass** ein rohrförmiges aufzunehmendes Teil (12), das eine radial erweiterte ringförmige Stauchung (22) hat, in dem Halter (16, 116) aufgenommen ist und die Stauchung zwischen dem Ring (56, 156) des Halters und den vorderen Widerlagerflächen (78, 178) angeordnet ist.

**Revendications**

**1.** Connecteur pour fluide (10) comprenant :

un corps de connecteur femelle (14) définissant un alésage de réception de tube creux (30) qui s'étend axialement vers l'intérieur dans ledit corps de connecteur depuis une ouverture d'entrée (32) et définissant un trajet de débit de fluide, ladite entrée étant définie par une collerette en extension radiale vers l'intérieur (34) ;
un dispositif de rétention en plastique (16, 116) reçu à l'intérieur dudit alésage dudit corps de connecteur femelle, dans lequel ledit dispositif de rétention possède un anneau cylindrique (56, 156) au niveau d'une première extrémité axialement interne et une pluralité de membres de verrouillage approximativement équidistants (64, 164) qui s'étendent axialement vers l'extérieur par rapport audit anneau, lesdits membres de verrouillage définissant chacun une fenêtre (74) et possédant un bras dans chaque fenêtre, chaque bras (76, 176) incluant une surface d'appui frontale (78, 178) et une surface d'appui dorsale (84, 184), lesdits membres de verrouillage (64, 164) étant séparés par des fentes en extension axiale (66, 166) entre chaque membre, chaque membre de verrouillage (64, 164) possédant deux colonnes (70, 170) et une poutre (72, 172) qui connecte lesdites deux colonnes de chaque membre de verrouillage au niveau d'une deuxième extrémité axialement externe, et ledit bras de chaque membre s'étendant axialement depuis chaque poutre (72, 172), entre lesdites colonnes (70, 170) dans ladite fenêtre (74, 174), **caractérisé en ce qu'**il y a au moins quatre membres de verrouillage, le rapport de contact des surfaces d'appui Frontales (78, 178) de tous les membres de verrouillage (64, 164) équivalant à :

$$\frac{\text{aire de surface totale des surfaces d'appui frontales } (78, 178)}{\pi * (D_6 / 2)^2 - \pi * (D_7 / 2)^2}$$

dans lequel $D_6$ est le diamètre extérieur des surfaces d'appui frontales (78, 178) et $D_7$ est le diamètre intérieur des surfaces d'appui frontales (78, 178); étant situé entre 0,50 et 0,80.

**2.** Connecteur pour fluide selon la revendication 1, **caractérisé en ce que** ledit dispositif de rétention (16, 116) est formé en polyéther- éthercétone.

**3.** Connecteur pour fluide selon la revendication 1, **caractérisé en ce que** le rapport de contact des surfaces d'appui frontales (78, 178) est situé entre 0,55 et 0,60.

4. Connecteur pour fluide selon la revendication 1, **caractérisé en ce que** le rapport de la distance de projection radiale de chacune desdites colonnes (70, 170) vis-à-vis du diamètre extérieur dudit anneau (56, 156) est situé entre 0,03 et 0,12.

5. Connecteur pour fluide selon la revendication 1, **caractérisé en ce que** le rapport de la distance de projection radiale de chacune desdites colonnes (70, 170) vis-à-vis du diamètre extérieur dudit anneau (56, 156) est situé entre 0,04 et 0,06.

6. Connecteur pour fluide selon la revendication 1, **caractérisé en ce que** ledit corps de connecteur (14) définit en outre une rainure (50) qui reçoit un membre d'étanchéisation (18), ladite rainure (50) possédant deux épaulements (52) qui s'étendent radialement vers l'extérieur depuis ledit alésage (30).

7. Connecteur pour fluide selon la revendication 6, **caractérisé en ce que** ledit membre d'étanchéisation (18) est un joint torique disposé dans ladite rainure (50).

8. Connecteur pour fluide selon la revendication 6, **caractérisé en ce que** la profondeur de ladite rainure (50) est inférieure au diamètre de la section transversale non - déformée dudit joint torique (18).

9. Connecteur pour fluide selon la revendication 6, **caractérisé en ce que** le joint torique (18) est déformé par la surface radialement vers l'extérieur de ladite rainure (50) et la surface extérieure d'un tube (20).

10. Connecteur pour fluide selon la revendication 1, **caractérisé en ce qu'**une portion dudit bras (76, 176) de chaque membre de verrouillage (64, 164) est directement connectée auxdites colonnes (70, 170) dudit membre de verrouillage (64, 164).

11. Connecteur pour fluide selon la revendication 1, **caractérisé en ce que** chaque bras (76, 176) de chaque membre de verrouillage (64, 164) possède une surface supérieure, dans laquelle une encoche (88, 186) est fonmée.

12. Connecteur pour fluide selon la revendication 11, **caractérisé en ce qu'**une section transversale de ladite encoche (88, 186) est en forme de L.

13. Connecteur pour fluide selon la revendication 11, **caractérisé en ce qu'**une section transversale de ladite encoche (88, 186) est en forme de U.

14. Connecteur pour fluide selon la revendication 11, **caractérisé en ce qu'**une extrémité dudit corps de connecteur femelle (14) possède une surface extérieure filetée (28), et ladite extrémité est apte à former un joint dans un accès formé dans un composant de système de freinage automobile.

15. Connecteur pour fluide selon la revendication 14, **caractérisé en ce que** l'autre extrémité dudit corps de connecteur femelle (14) possède une surface extérieure hexagonale (26) et un chanfrein (29) est fourni dans ledit alésage interne (48) au niveau de ladite extrémité filetée.

16. Connecteur pour fluide selon la revendication 1, **caractérisé en ce qu'**un membre mâle (12) comprend en outre une couche de nylon, qui revêt un bourrelet (22).

17. Connecteur pour fluide selon la revendication 1, **caractérisé en ce que** lesdites colonnes (70, 170) possèdent des surfaces radialement intérieures (70b, 170b) et extérieures (70a, 170a) et le rapport de l'aire de section transversale d'une colonne vis-à-vis de l'aire d'une surface plane annulaire imaginaire, qui est perpendiculaire à la ligne médiane dudit alésage axial et possède une circonférence extérieure coïncidant avec les surfaces extérieures (70a, 170a) desdites colonnes (70, 170) et une circonférence intérieure coïncidant avec les surfaces radialement intérieures (70b, 170b) desdites colonnes, est situé entre 0,03 et 0,06.

18. Connecteur pour fluide selon la revendication 1, **caractérisé en ce que** lesdites colonnes possèdent des surfaces radialement intérieures et extérieures et le rapport de l'aire de section transversale d'une colonne (70, 170) vis-à-vis de l'aire d'une surface plane annulaire imaginaire, qui est perpendiculaire à la ligne médiane dudit alésage axial et possède une circonférence extérieure coïncidant avec les surfaces extérieures (70a, 170a) desdites colonnes (70, 170) et une circonférence intérieure coïncidant avec les surfaces radialement intérieures (70b, 170b) desdites colonnes, est situé entre 0,03 et 0,06.

19. Connecteur pour fluide selon la revendication 1, **caractérisé en ce que** chaque bras (76, 176) inclut une surface de fond cylindrique plate (90, 190) qui s'étend axialement depuis ladite première surface d'appui (78, 178) vers ladite deuxième surface d'appui (84, 184) et le rapport de la longueur axiale de ladite surface de fond cylindrique plate vis-à-vis de la distance entre lesdites première et deuxième surfaces d'appui est situé entre 0,20 et 0,25.

20. Connecteur pour fluide selon la revendication 18, **caractérisé en ce que** chaque bras (76, 176) inclut une surface de fond cylindrique plate (90, 190) qui s'étend axialement depuis ladite surface d'appui frontale (78, 178) vers ladite surface d'appui dorsale (84, 184), et le rapport de la longueur axiale de ladite surface de fond cylindrique plate vis-à-vis de la distance entre lesdites surfaces d'appui frontale dorsale est situé entre 0,20 et 0,25.

21. Connecteur pour fluide selon l'une des revendications 1, 17, 18, 19 et 20, **caractérisé en ce que** ledit connecteur peut maintenir son intégrité imperméable au moins jusqu'à une pression fluidique égale à 344,83 bars (5000 livres par pouce carré), après avoir été assujetti à une température de 125° Centigrades (257° Fahrenheit) pendant au moins 24 heures, au cours d'une soumission à un accroissement de pression de 34,48 bars (500 livres par pouce carré) par minute.

22. Connecteur pour fluide selon la revendication 1, **caractérisé en ce que** chaque bras (76, 176) inclut des surfaces d'arête inclinées, qui débutent de façon intermédiaire entre ladite surface d'appui frontale (78, 178) et ladite surface d'appui dorsale (84, 184) et s'étendent axialement l'une vers l'autre jusqu'au bord extérieur axial de ladite poutre, pour définir des fentes divergentes entre lesdits membres de verrouillage.

23. Connecteur pour fluide selon la revendication 1, **caractérisé en ce que** lesdites colonnes (70, 170) des membres de verrouillage adjacents (64, 164) définissent lesdites fentes et la longueur axiale desdites fentes entre les membres de verrouillage adjacents se termine de façon intermédiaire entre ledit anneau cylindrique (56, 156) et lesdites surfaces d'appui frontales (78, 178).

24. Connecteur pour fluide selon l'une des revendications 1, 2, 3, 17, 19, 26 et 27, **caractérisé en ce qu'**un membre mâle tubulaire (12) possédant un bourrelet annulaire radialement élargi (22) est reçu dans ledit dispositif de rétention (16, 116), et ledit bourrelet est situé entre ledit anneau (56, 156) dudit dispositif de rétention et lesdites surfaces d'appui frontales (78, 178).

FIG. 1.

FIG.3

FIG.2.

FIG.4.

FIG.5.

FIG.7.

FIG.8.

FIG.6.

FIG. 9.

EP 1 561 990 B1

FIG.10

FIG.12.

FIG.13.

FIG.11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5161832 A
- US 5931509 A
- US 5324082 A
- US 5626371 A